# FASCICULE DE BREVET EUROPEEN

(11) **EP 3 999 719 B1**
(45) Date de publication et mention de la délivrance du brevet: **28.08.2024**
(21) Numéro de dépôt: 20753990.9
(22) Date de dépôt: 16.07.2020
(51) Int. Cl.: F01D 7/02, B64C 11/38, F04D 29/32

(54) **MODULE DE TURBOMACHINE ÉQUIPÉ DE SYSTEME DE CHANGEMENT DE PAS DES PALES D'UNE HÉLICE ET D'UN DISPOSITIF DE MISE EN DRAPEAU DES PALES**
KOMPONENT EINER TURBOMASCHINE MIT EINER VORRICHTUNG ZUR ÄNDERUNG DES DREHWINKELS EINES BLATTES UND VORRICHTUNG ZUM AUSFLAGGEN DES BLATTES
MODULE OF A TURBOMACHINE COMPRISING A SYSTEM FOR MODIFYING THE BLADE PITCH OF AN AIRFOIL AND A DEVICE FOR FEATHERING THIS AIRFOIL

(30) Priorité: 18.07.2019 FR 1908149
(43) Date de publication de la demande: 25.05.2022
(73) Titulaire: SAFRAN AIRCRAFT ENGINES, 75015 Paris (FR)
(72) Inventeur: COTTET, Clément, 77550 MOISSY-CRAMAYEL (FR); PAPIN, Thierry, Georges, Paul, 77550 MOISSY-CRAMAYEL (FR); SERVANT, Régis, Eugène, Henri, 77550 MOISSY-CRAMAYEL (FR)
(74) Mandataire: Gevers & Orès
(86) Numéro de dépôt international: PCT/FR2020/051291
(87) Numéro de publication internationale: WO 2021/009468

(56) Documents cités:
- FR-A1- 3 046 432
- US-A1- 2011 236 212
- US-A1- 2018 043 990

## Description

### Domaine de l'invention

La présente invention concerne le domaine des turbomachines et en particulier un module pour le changement de pas des pales d'une hélice de turbomachine. Elle vise également la turbomachine correspondante.

### Arrière-plan technique

La recherche de la meilleure efficacité propulsive en améliorant le rendement propulsif des turbomachines et en diminuant spécifiquement leur consommation a conduit à augmenter le taux de dilution de celles-ci. De ce fait apparaissent dans le paysage aéronautique, des hélices de turbopropulseur et des soufflantes de turboréacteurs qui affichent des diamètres externes de plus en plus élevés. De tels choix génèrent un accroissement des contraintes d'opérabilité des pales de soufflante ou des hélices entre les conditions de fonctionnement au sol et en vol tels que la diminution de leurs vitesses, leur taux de compression, etc.

Un moyen efficace de répondre à ces contraintes a été de considérer des pales de soufflante ou d'une hélice avec un calage variable. Les hélices ou soufflantes à calage ou à pas variable permettent de régler le calage ou l'orientation des pales, et plus précisément l'angle de calage des pales en fonction des paramètres de vol de manière à optimiser le fonctionnement de celles-ci. Pour cela, les turbomachines sont équipées d'un système de changement de pas des pales qui comprend un moyen de commande comportant un corps mobile axialement monté autour d'un carter fixe, au moins un palier de transfert de charge relié au corps mobile et à un mécanisme de liaison qui est connecté aux pales. Les pales à calage variable peuvent occuper une position extrême de travail dite d'inversion de poussée (connue sous le terme anglais « reverse ») dans laquelle celles-ci permettent de générer une contre poussée de manière à participer au ralentissement de l'aéronef et une position extrême de mise en drapeau dans laquelle, en cas de défaillance du système de changement de pas, de panne ou d'arrêt de la turbomachine, celles-ci permettent de minimiser la traînée aérodynamique et de limiter la rotation de la turbomachine. Dans cette dernière configuration, les pales n'absorbent, ni ne fournissent d'énergie. Des exemples de systèmes de changement de pas ou de mise en drapeau des pales sont décrits dans les documents et FR-A1 -3046432, qui est le document présentant les caractéristiques techniques du préambule de la revendication indépendante 1, US-A1-2011/236212 et US-A1-2018/043990.

Une problématique se pose pour la mise en drapeau des pales en cas de panne de la turbomachine notamment. Il est connu que la mise en drapeau soit opérée à l'aide d'un contrepoids formé par des masselottes qui sont attachées de manière appropriée au pivot de chaque pale pour que leur inertie ramène la pale dans la position de drapeau. Cependant, ce système est relativement lourd et son intégration dans le rotor de la soufflante ou de l'hélice à bas rapport de moyeu peut être compliquée en fonction de l'architecture de la turbomachine.

### Résumé de l'invention

L'objectif de la présente invention est de fournir un dispositif de mise en drapeau permettant de réduire la masse d'un module de turbomachine équipé d'un système de changement de pas et de faciliter son intégration tout en évitant les modifications structurelles importantes. Nous parvenons à cet objectif conformément à l'invention grâce à un module de turbomachine d'axe longitudinal X, le module comportant:
- un carter rotatif autour de l'axe longitudinal et portant une hélice munie d'une pluralité de pales ;
- un carter fixe comprenant une paroi cylindrique s'étendant entre une paroi interne et une paroi externe du carter rotatif; et,
- un système de changement de pas des pales de l'hélice monté autour du carter fixe et comprenant :
   ∘ un moyen de commande comportant un corps mobile axialement sur ledit carter,
   ∘ au moins un palier de transfert de charge comportant une bague interne reliée au corps mobile et une bague externe ; et
   ∘ un mécanisme de liaison de la bague externe aux pales de l'hélice,
le module comprenant en outre un dispositif de mise en drapeau des pales de l'hélice, ce dispositif comportant une rangée annulaire de ressorts disposés autour dudit carter fixe et s'étendant axialement, les ressorts étant régulièrement espacés autour de l'axe longitudinal X et comportant des premières extrémités axiales prenant appui sur une virole du carter fixe, et des secondes extrémités axiales opposées prenant appui sur ladite bague interne.

Ainsi, cette solution permet d'atteindre l'objectif susmentionné. En particulier, les ressorts permettent facilement le retour de la mise en drapeau des pales de l'hélice qui forcerait, en cas de défaillance du moyen de commande par exemple, à ce que ce dernier se positionne dans une position correspondant à la position de mise en drapeau des pales. Ces ressorts sont une solution de type passif avec un taux de panne nul et qui fournissent le meilleur compromis entre l'effort, la masse et l'encombrement. Par ailleurs, le fait de proposer une rangée annulaire de ressorts est un agencement efficace pour garantir le retour optimal en mise en drapeau et qui est lié au grand diamètre de l'hélice. Enfin, l'installation des ressorts entre une virole du carter fixe et un anneau de la bague interne du palier de transfert de charge ne modifie nullement structurellement les pièces du système de changement de pas.

Le module comprend également l'une ou plusieurs des caractéristiques suivantes, prises seules ou en combinaison :
- les ressorts sont des ressorts de compression.
- le nombre de ressorts est compris entre 6 et 20.
- chaque ressort est logé dans une cartouche configurée de manière à guider le ressort sur sa périphérie intérieure et sur sa périphérie extérieure.
- la virole est rapportée et fixée à une extrémité axiale d'une paroi cylindrique du carter fixe, ledit moyen de commande ayant son corps mobile monté autour de cette paroi cylindrique.
- le corps mobile du moyen de commande est monté radialement à l'extérieur d'une paroi annulaire d'un corps fixe du moyen de commande.
- le corps mobile du moyen de commande est monté radialement à l'extérieur de la paroi annulaire du corps fixe du moyen de commande.
- chaque ressort est logé dans une cartouche configurée de manière à guider le ressort sur sa périphérie intérieure et sur sa périphérie extérieure.
- la virole comprend une rangée annulaire d'oreilles s'étendant sensiblement radialement par rapport audit axe longitudinal, chaque oreille définissant un logement de réception de première extrémité de ressort.
- les secondes extrémités prennent appui sur un anneau fixé à ladite bague interne.
- ledit anneau comprend des futs de réception des secondes extrémités des ressorts.
- les ressorts ont leurs axes situés sur une circonférence dont le diamètre est sensiblement similaire au diamètre de ladite bague interne.
- chaque cartouche est formée d'une oreille et d'un fut de réception.
- la bague interne du palier de transfert de charge est montée sur une virole interne annulaire autour de l'axe longitudinal X et est reliée au corps mobile via l'anneau coaxial à l'axe longitudinal X.
- les ressorts ont une dimension axiale supérieure à celle dudit au moins un palier de transfert de charge et sont configurés pour avoir une course de détente ou de compression apte à assurer le déplacement de chaque pale d'une position extrême de travail à une position extrême de mise en drapeau.

L'invention concerne en outre une turbomachine d'aéronef comprenant au moins un module tel que précité. La turbomachine peut être un turbopropulseur ou un turboréacteur.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
[Fig. 1] La figure 1 est une vue en coupe axiale et partielle d'un exemple de turbomachine à laquelle s'applique l'invention ;
[Fig. 2] La figure 2 représente en coupe axiale et partielle un autre exemple de turbomachine à laquelle s'applique l'invention ;
[Fig. 3] La figure 3 est une vue en coupe axiale et partielle d'un module de turbomachine comprenant un système de changement de pas et un dispositif de mise en drapeau coopérant avec ledit système de changement de pas selon l'invention ;
[Fig. 4] La figure 4 est une vue arrière et en perspective d'un système de changement de pas et de dispositif de mise en drapeau selon l'invention ;
[Fig. 5] La figure 5 est une vue de détail du dispositif de mise en drapeau tel qu'illustré sur la figure 3;
[Fig. 6] La figure 6 représente un dispositif de mise en drapeau dans une première position selon l'invention ; et
[Fig. 7] La figure 7 représente le dispositif de mise en drapeau dans une deuxième position selon l'invention.

### Description détaillée de l'invention

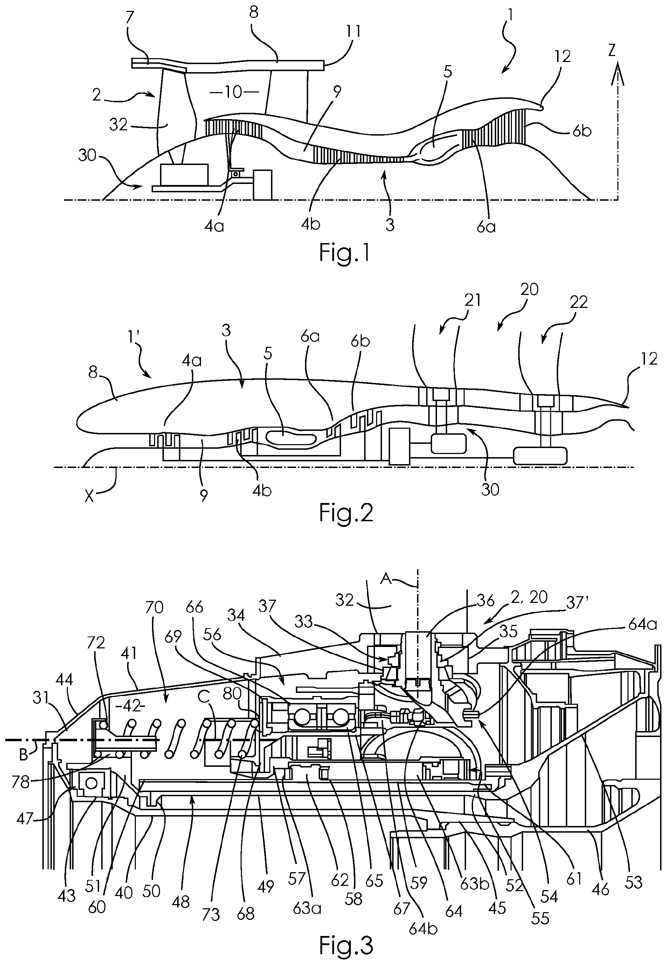

L'invention s'applique aux turbomachines comprenant une hélice ou soufflante avec des pales à calage variable. De telles turbomachines peuvent être un turboréacteur tel que représenté sur la figure 1 ou un turbopropulseur tel que représenté sur la figure 2.

Dans la présente invention, et de manière générale, les termes « amont » et « aval » sont définis par rapport à la circulation des gaz dans la turbomachine et ici suivant l'axe longitudinal X (et même de gauche à droite sur la figure 1). Les termes « axial » et « axialement » sont définis également par rapport à l'axe longitudinal X. De même, les termes « radial », « interne » et « externe » sont définis par rapport à un axe radial Z perpendiculaire à l'axe longitudinal X et au regard de l'éloignement par rapport à l'axe longitudinal X.

Sur la figure 1, la turbomachine, d'axe longitudinal X, en coupe axiale et partielle est du type double flux et double corps et est destinée à être montée sur un aéronef. Cette turbomachine 1 à double flux comprend, de manière générale, une soufflante 2 montée en amont d'un générateur de gaz 3.

Le générateur de gaz 3 comprend d'amont en aval, un compresseur basse pression 4a, un compresseur haute pression 4b, une chambre de combustion 5, une turbine haute pression 6a et une turbine basse pression 6b.

La soufflante 2, qui est entourée par un carter de soufflante 7 est dite carénée. Le carter de soufflante est porté par une nacelle 8 enveloppant la turbomachine. La soufflante divise l'air qui entre dans la turbomachine en un flux d'air primaire qui traverse le générateur de gaz 3 et en particulier dans une veine primaire 9, et en un flux d'air secondaire qui circule autour du générateur de gaz dans une veine secondaire 10. Le flux d'air secondaire est éjecté par une tuyère secondaire 11 terminant la nacelle alors que le flux d'air primaire est éjecté à l'extérieur de la turbomachine via une tuyère d'éjection 12 située en aval du générateur de gaz 3.

Sur la figure 2, la turbomachine 1' de type turbopropulseur, d'axe longitudinal X, comprend un doublet d'hélices non carénées et est destinée à être monté sur un aéronef. Les éléments identiques ou sensiblement identiques décrits précédemment sont représentés par les mêmes références numériques. Cette turbomachine est connue sous l'expression anglaise « open rotor » ou « unducted fan ». Les turbopropulseurs se distinguent donc des turboréacteurs par l'utilisation d'au moins une hélice à l'extérieur de la nacelle (non carénée) au lieu d'une soufflante interne (carénée).

La turbomachine 1' comprend une nacelle 8 ou carter dans laquelle est agencé un générateur de gaz 3 lequel comprend, d'amont en aval, un compresseur basse pression 4a, un compresseur haute pression 4b, une chambre de combustion 5, une turbine haute pression 6a et une turbine basse pression 6b. Le générateur de gaz peut comprendre un compresseur basse pression, une chambre de combustion, une turbine basse pression liée au compresseur et une turbine libre.

Le doublet d'hélices 20 comprend une hélice amont 21 et une hélice aval 22 qui sont ici contrarotatives. Les hélices amont 21 et aval 22 sont montées coaxialement à l'axe longitudinal X de la turbomachine et sont disposées dans des plans parallèles radiaux, lesquels sont perpendiculaires à l'axe longitudinal X. Dans le présent exemple, les hélices 21, 22 sont montées en aval du générateur de gaz. Une partie du flux d'air entrant dans la turbomachine traverse le générateur de gaz dans une veine primaire 9 puis est éjecté par la tuyère 12 pour participer à la poussée de la turbomachine. La turbine libre ou les turbines entraînent en rotation les hélices 21, 22 qui compriment l'air à l'extérieur de la nacelle et fournissent la majeure partie de la poussée.

Le turbopropulseur comme le turboréacteur comprennent un module de turbomachine avec les pales d'une hélice (amont ou aval) et au moins un système de changement de pas 30 des pales. De manière générale et dans la suite de la description, le terme « hélice » est employé pour désigner indifféremment une soufflante ou une hélice.

En référence à la figure 3, le module comprend un carter rotatif 31 autour de l'axe longitudinal qui porte l'hélice 2 munie d'une pluralité de pales 32. Chaque pale 32 comprend un pied 33 et s'étend radialement vers l'extérieur depuis le pied. L'extrémité libre des pales est délimitée radialement par le carter de soufflante 7 dans le cas du turboréacteur. Le carter rotatif comprend plus précisément un anneau de support 34 centré sur l'axe longitudinal X et qui est pourvu de logements 35 cylindriques radiaux régulièrement répartis sur la périphérie de l'anneau de support 34. Les logements 35 reçoivent chacun, de manière pivotante suivant un axe de calage A, un pied 33 de pale. L'axe de calage A est parallèle à l'axe radial Z.

Typiquement, chaque pied de pale se présente sous la forme d'un pivot 36 qui est monté dans un logement 35 au moyen d'au moins un palier de guidage 37. Dans le présent exemple, deux paliers de guidage 37, 37' se superposent suivant l'axe radial Z. Ces paliers 37 sont des paliers lisses et comprennent chacun une bague interne solidaire en rotation du pivot et une bague externe qui entoure la bague interne. La bague externe est portée par le carter rotatif 31.

Comme nous pouvons le voir sur la figure 3, le carter rotatif 31 comprend une paroi interne 40 et une paroi externe 41 qui sont de révolution. La paroi interne et la paroi externe forment un volume 42 annulaire. La paroi externe 41 porte l'anneau de support 34 des pales. La paroi interne 40 comprend en amont une première paroi 43, de forme générale sensiblement tronconique, qui vient se fixer à une première extrémité 44 de forme générale tronconique de la paroi externe 41. La deuxième extrémité 45 de la paroi interne 40 est couplée à une deuxième paroi 46 tronconique également.

Le carter rotatif 31 est supporté par au moins un palier sur un carter fixe 48 solidaire d'une structure fixe de la turbomachine. Le carter fixe 48 comprend une paroi cylindrique 49 (ici à section circulaire) qui s'étend radialement entre la paroi interne 40 et la paroi externe 41 du carter rotatif 31. La paroi cylindrique 49 comprend à son extrémité axiale 50 en amont, une première virole 51 de section axiale sensiblement tronconique et centrée sur l'axe X. Avantageusement, mais non limitativement, la première virole 51 est rapportée et fixée à l'extrémité axiale 50 amont de la paroi cylindrique 49.

La paroi cylindrique 49 comprend également à son extrémité axiale 52 opposée, en aval, une deuxième virole 53 de section axiale sensiblement tronconique, centrée sur l'axe X et fixée sur la structure fixe de la turbomachine. La première virole 51 s'élargit ou s'évase d'aval en amont par rapport à l'axe longitudinal X tandis que la deuxième virole 53 s'élargit ou s'évase d'aval en amont.

Ici, un palier à roulements 47 est interposé en amont entre la première virole 51 du carter fixe 48 et la première paroi 43 de la paroi interne 40 du carter rotatif 31.

Le système de changement de pas 30 des pales permet de faire varier le calage ou le pas des pales autour de leurs axes de calage de sorte qu'elles occupent différentes positions angulaires selon les conditions de fonctionnement de la turbomachine et les phases de vol concernées. Chaque pale pivote entre une position extrême de travail (position d'inversion de poussée connue en anglais sous le terme « reverse ») et une position extrême de mise en drapeau des pales. En particulier, dans la position extrême d'inversion de poussée, les pales de l'hélice participent au freinage de l'aéronef, à la manière des inverseurs de poussée usuels et présentent chacun un angle de calage de l'ordre de 5° par rapport au plan de rotation des pales. Dans la position extrême de mise en drapeau, les pales sont alors effacées au mieux par rapport à la direction d'avance de l'aéronef, par exemple en cas de panne de la turbomachine, ce qui permet de limiter la traînée. Dans cette dernière position, l'angle de calage des pales est positif, et est généralement de l'ordre de 90° par rapport au plan de rotation des pales.

En phase de vol, les pales pivotent entre ces deux positions extrêmes et peuvent occuper une position de petit pas où la vitesse de la turbomachine est faible (par exemple au sol) et de grand pas où la vitesse de la turbomachine est élevée (par exemple en montée et au décollage). L'angle de calage de petit pas est de l'ordre de 30° par rapport au plan de rotation des pales alors que l'angle de calage de grand pas est de l'ordre de 40° pour les phases de décollage ou de l'ordre de 60° pour les phases de montée.

Le système de changement de pas 30 est agencé dans le volume 42 formé par la paroi interne 40 et la paroi externe 41 du carter rotatif 31. Le système de changement de pas 30 comprend un mécanisme de liaison 54 relié aux pales, un moyen de commande 55 agissant sur le mécanisme de liaison 54 et un palier de transfert de charge 56 agencé cinématiquement entre le mécanisme de liaison 54 et le moyen de commande 55.

Le moyen de commande 55 comporte un corps mobile 57 axialement sur le carter fixe 48. En particulier le moyen de commande 55 comprend un corps fixe 58 qui est solidaire de la structure fixe de la turbomachine et le corps mobile 57 qui se déplace en translation axialement par rapport au corps fixe 58. Ce dernier est monté sur le carter fixe de manière à être immobile en translation et en rotation par rapport au carter fixe 48. Le corps fixe 58 comprend une paroi annulaire 59 qui est coaxiale avec l'axe longitudinal et qui comprend une première extrémité libre 60 et une deuxième extrémité 61 opposée à la première extrémité libre suivant l'axe longitudinal. Cette deuxième extrémité 61 est fixée à la paroi cylindrique 49 du carter fixe vers son extrémité 52 aval.

Le corps fixe 58 comprend une paroi radiale 62 s'étendant depuis la paroi annulaire 59, vers l'extérieur de manière à délimiter deux chambres 63a, 63b à volumes variables et opposées axialement dans le corps mobile. Le corps mobile est monté autour de la paroi cylindrique 49 du carter fixe (et s'étend aussi radialement à l'extérieur de la paroi annulaire 59 du corps fixe 58).

Dans le présent exemple, le moyen de commande 55 est un vérin hydraulique comprenant le corps fixe et le corps mobile. Le moyen de commande 55 est relié à une source d'alimentation fluidique pour alimenter en huile sous pression les chambres 63a, 63b du corps mobile.

Le mécanisme de liaison 54 est relié d'une part, aux pales et d'autre part, au moyen de commande 55 via le palier de transfert de charge 56. Le mécanisme de liaison 54 comprend plusieurs bielles 64 qui présentent chacune une première extrémité 64a reliée à une pale et une deuxième extrémité 64b reliée au palier de transfert de charge 56.

Le palier de transfert de charge 56 est disposé entre le mécanisme de liaison 54 et le corps mobile 57 du moyen de commande 55 de manière à assurer la transmission des efforts axiaux exercés par le corps mobile. Le palier de transfert de charge comprend une bague interne 65 et une bague externe 66 formant des pistes de roulement pour des éléments roulants. Ici le palier 56 est formé par un roulement à deux rangées de billes. La bague interne 65 est montée sur une virole interne 67 annulaire autour de l'axe longitudinal X et est reliée au corps mobile via un anneau 68 coaxial à l'axe X. L'anneau 68 comprend une paroi qui s'étend radialement. La bague externe 66 est solidaire d'une virole externe 69 annulaire qui est reliée au mécanisme de liaison 54.

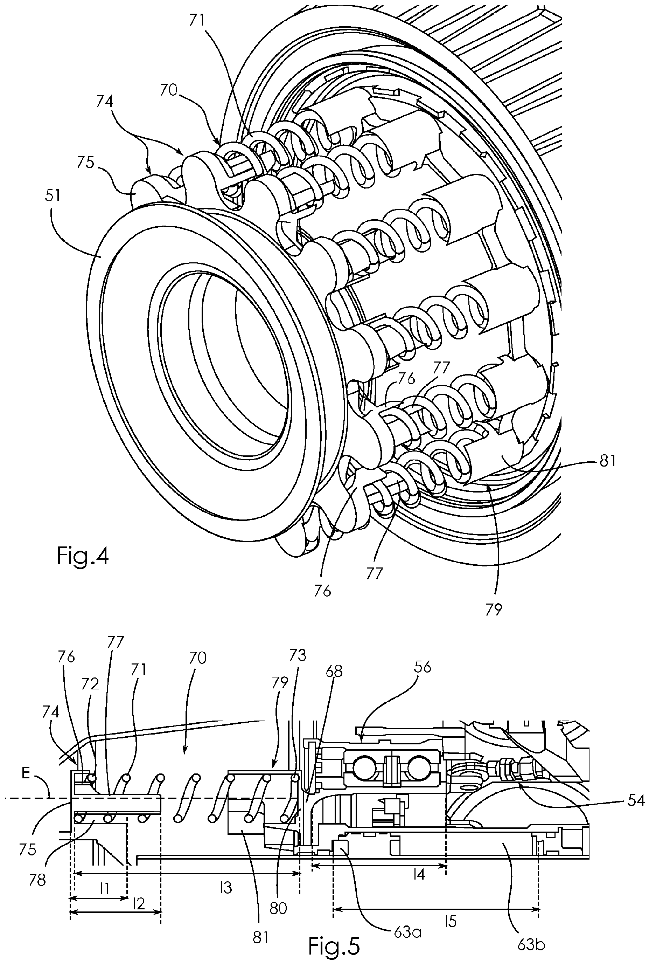

En référence aux figures 3 et 4, le module de turbomachine comprend en outre un dispositif de mise en drapeau des pales 70 de l'hélice. Ce dispositif 70 comporte une rangée annulaire de ressorts 71 disposés autour dudit carter fixe. Les ressorts sont régulièrement espacés autour de l'axe longitudinal. Leur nombre est compris entre 6 et 20. Chaque ressort 71 s'étend axialement entre une première extrémité axiale 72 et une seconde extrémité axiale 73. Comme nous pouvons le voir sur ces figures, chaque ressort est monté radialement entre au moins en partie la paroi annulaire du carter fixe 48 et la paroi externe 41 du carter rotatif 31. Chaque ressort s'étend également axialement entre une paroi du carter fixe 48 et le palier de transfert de charge 56.

Les premières extrémités axiales 72 des ressorts prennent appui sur la première virole 51 du carter fixe et les secondes extrémités axiales 73 des ressorts prennent appui sur la bague interne 65 du palier de transfert de charge 56.

Dans le présent exemple, les ressorts 71 sont des ressorts de compression.

Avantageusement, mais non limitativement, la première virole 51 comprend une rangée annulaire d'oreilles 74 s'étendant sensiblement radialement par rapport à l'axe longitudinal. Les oreilles sont régulièrement réparties autour de l'axe longitudinal. Il y a autant d'oreilles que de ressorts. Chaque oreille définit un logement de réception 78 de première extrémité de ressort. Comme nous pouvons le voir en particulier sur les figures 4 et 5, chaque oreille comprend une base radiale 75 et première cloison 76 qui s'étend axialement depuis la base radiale 75. Dans cet exemple de réalisation, la première cloison 76 est semi-cylindrique d'axe B (cf. figure 3). Chaque oreille 74 comprend également une deuxième cloison 77 qui s'étend depuis la base radiale 75, à l'intérieur de la première cloison et coaxialement. La deuxième cloison 77 est également semi-cylindrique. La première cloison et la deuxième cloison se superposent radialement. La deuxième cloison 77 présente une longueur axiale l2 qui est supérieure ici à la longueur axiale l1 de la première cloison 76. La deuxième cloison est espacée également radialement de la première cloison et forment entre elles le logement de réception 78 d'une première extrémité de ressort.

L'anneau 68 fixé à la bague interne 65 du palier de transfert de charge est coaxial avec l'axe longitudinal X. Les deuxièmes extrémités des ressorts prennent avantageusement appui sur cet anneau 68. Ce dernier comprend des futs de réception 79 des secondes extrémités. En particulier, les futs de réception 79 sont disposés suivant une rangée annulaire autour de l'axe longitudinal et sont régulièrement répartis. De même que les oreilles, il y a autant de futs de réception que de ressorts. Chaque fut de réception comprend une paroi de fond 80 et une paroi 81 qui s'étend axialement depuis la paroi de fond. La paroi 81 est avantageusement, mais non limitativement semi-cylindrique d'axe C (cf. figure 3). Une partie de chaque ressort 71, notamment sa seconde extrémité 73 est logée à l'intérieur du fût de réception 79.

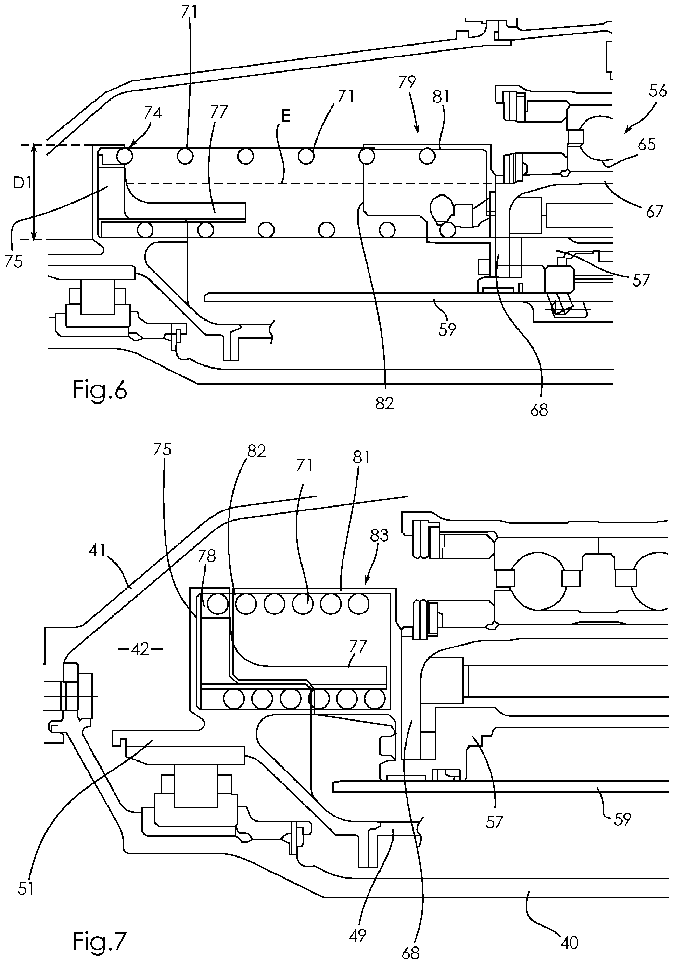

Chaque fût de réception 79 est agencé en regard d'une oreille 74 axialement comme nous pouvons le voir sur la figure 5. En référence à la figure 6, le diamètre de chaque paroi du fût de réception est sensiblement égal au diamètre D1 de la première cloison des oreilles. De la sorte, les fûts de réception et les oreilles permettent d'accompagner respectivement un ressort 71 afin de l'empêcher de sortir ou de dépasser radialement de la cartouche 83 que forment au moins en partie une oreille 74 et un fut de réception 79 correspondant.

Chaque fut de réception 79 guide un ressort 71 sur la périphérie extérieure de celui-ci alors que l'oreille 74 (avec ses cloisons 76, 77) guide le ressort par l'intérieur (périphérie intérieure du ressort 71). Cela limite une portion minimale de la longueur du ressort qui est laissé « libre » et qui se déforme sous l'effet de la force centrifuge, lorsque le ressort est détendu.

Suivant cet exemple de réalisation, et comme nous pouvons le voir en détail sur les figures 5 et 6, les ressorts 71 ont leurs axes E situés sur une circonférence dont le diamètre est sensiblement similaire au diamètre de la bague interne du palier de transfert de charge. En particulier, la circonférence correspond sensiblement au diamètre interne de la bague interne du palier de transfert de charge. Nous comprenons que cette configuration permet d'une part, une application des efforts des ressorts avantageusement dans l'axe de la bague interne en évitant des efforts transverses et d'autre part, une bonne compacité radialement dans le module.

Les ressorts 71 ont une dimension axiale l3 supérieure à celle (l4) du palier de transfert de charge. La dimension axiale des ressorts 71 est également supérieure à la longueur axiale l5 des deux chambres 63a, 63b du corps mobile. Les ressorts sont également configurés pour avoir une course de détente ou de compression apte à assurer le déplacement de chaque pale d'une position extrême de travail à une position extrême de drapeau.

Sur les figures 6 et 7 sont représentées respectivement les positions extrêmes de travail et de mise en drapeau des pales de l'hélice. En position extrême de travail (figure 7), le corps mobile du moyen de commande 55 se trouve en amont du volume annulaire 42. Les ressorts 71 sont comprimés et sont emprisonnés dans la cartouche 83 fermée formée par chaque fut de réception 79 et oreille 74. Dans cette position, la paroi du fut cylindrique comprend une bordure 82 qui vient en butée contre la paroi interne radiale de la base 75 de l'oreille correspondante. En position extrême de mise en drapeau (figure 6), le corps mobile du moyen de commande 55 est situé vers l'aval. Chaque ressort 71 est étiré ou détendu entre l'oreille et le fût de réception correspondant. La bordure 82 de la paroi 81 du fût de réception se trouve axialement à distance de la base 75 de l'oreille correspondante.

## Revendications

1. Module de turbomachine d'axe longitudinal X, le module comportant:
- un carter rotatif (31) autour de l'axe longitudinal et portant une hélice (2 ; 20, 21, 22) munie d'une pluralité de pales (32);
- un carter fixe (48) comprenant une paroi (49) cylindrique s'étendant entre une paroi interne (40) et une paroi externe (41) du carter rotatif (31); et,
- un système (30) de changement de pas des pales de l'hélice monté autour du carter fixe (48) et comprenant :
∘ un moyen de commande (55) comportant un corps mobile (57) axialement sur ledit carter fixe (48),
∘ au moins un palier de transfert de charge (56) comportant une bague interne (65) reliée au corps mobile (57) et une bague externe (66); et
∘ un mécanisme de liaison (61) de la bague externe (66) aux pales de l'hélice,
le module comprenant en outre un dispositif de mise en drapeau (70) des pales de l'hélice, le module étant **caractérisé en ce que** ce dispositif (70) comporte une rangée annulaire de ressorts (71) disposés autour dudit carter fixe (48) et s'étendant axialement, les ressorts (71) étant régulièrement espacés autour de l'axe longitudinal X et comportant des premières extrémités (72) axiales prenant appui sur une virole (51) du carter fixe (48), et des secondes extrémités (73) axiales opposées prenant appui sur ladite bague interne (65).

2. Module selon la revendication précédente, **caractérisé en ce que** les ressorts (71) sont des ressorts de compression.

3. Module selon la revendication 1 ou 2, **caractérisé en ce que** le nombre de ressorts (71) est compris entre 6 et 20.

4. Module selon l'une des revendications précédentes, **caractérisé en ce que** la virole (51) est rapportée et fixée à une extrémité axiale (50) d'une paroi cylindrique (49) du carter fixe (48), ledit moyen de commande (55) ayant son corps mobile (57) monté autour de cette paroi cylindrique (49).

5. Module selon l'une des revendications précédentes, **caractérisé en ce que** le corps mobile (57) du moyen de commande (55) est monté radialement à l'extérieur d'une paroi annulaire (59) d'un corps fixe (58) du moyen de commande (55).

6. Module selon l'une des revendications précédentes, **caractérisé en ce que** chaque ressort (71) est logé dans une cartouche (83) configurée de manière à guider le ressort (71) sur sa périphérie intérieure et sur sa périphérie extérieure.

7. Module selon l'une des revendications précédentes, **caractérisé en ce que** la virole (51) comprend une rangée annulaire d'oreilles (74) s'étendant sensiblement radialement par rapport audit axe longitudinal, chaque oreille (74) définissant un logement de réception (78) de première extrémité (72) de ressort.

8. Module selon l'une des revendications précédentes, **caractérisé en ce que** les secondes extrémités (73) prennent appui sur un anneau (68) fixé à ladite bague interne (65).

9. Module selon la revendication précédente, **caractérisé en ce que** ledit anneau (68) comprend des futs de réception (79) des secondes extrémités des ressorts.

10. Module selon l'une quelconque des revendications 6 à 9, **caractérisé en ce que** chaque cartouche (83) est formée d'une oreille (71) et d'un fut de réception (79).

11. Module selon l'une des revendications 8 à 10, **caractérisé en ce que** la bague interne (65) du palier de transfert de charge (56) est montée sur une virole interne (67) annulaire autour de l'axe longitudinal X et est reliée au corps mobile (57) via l'anneau (68) coaxial à l'axe longitudinal X.

12. Module selon l'une des revendications précédentes, **caractérisé en ce que** les ressorts (71) ont leurs axes situés sur une circonférence dont le diamètre est similaire au diamètre de ladite bague interne (65).

13. Module selon l'une des revendications précédentes, **caractérisé en ce que** les ressorts (71) ont une dimension axiale supérieure à celle dudit au moins un palier de transfert de charge (56) et sont configurés pour avoir une course de détente ou de compression apte à assurer le déplacement de chaque pale d'une position extrême de travail à une position extrême de mise en drapeau.

14. Turbomachine (1, 1') d'aéronef comprenant au moins un module selon l'une quelconque des revendications précédentes.

## Patentansprüche

1. Modul einer Turbomaschine mit Längsachse X, wobei das Modul Folgendes umfasst:
- ein um die Längsachse herum drehbares Gehäuse (31), das einen Propeller (2; 20, 21, 22) trägt, der mit einer Vielzahl von Blättern (32) ausgestattet ist;
- ein festes Gehäuse (48), das eine zylindrische Wand (49) umfasst, die sich zwischen einer Innenwand (40) und einer Außenwand (41) des drehbaren Gehäuses (31) erstreckt; und
- ein System (30) zur Änderung von Anstellwinkeln der Propellerblätter, das um das feste Gehäuse (48) herum montiert ist und Folgendes umfasst:
- ein Steuermittel (55), das einen axial auf dem festen Gehäuse (48) beweglichen Körper (57) umfasst,
- mindestens ein Lager zur Lastübertragung (56), umfassend einen inneren Ring (65), der mit dem beweglichen Körper (57) verbunden ist, und einen äußeren Ring (66); und
- einen Verbindungsmechanismus (61) des äußeren Rings (66) mit den Propellerblättern,
wobei das Modul weiter eine Vorrichtung zur Segelstellungssetzung (70) der Propellerblätter umfasst, wobei das Modul **dadurch gekennzeichnet ist, dass** diese Vorrichtung (70) eine ringförmige Reihe von Federn (71) umfasst, die um das feste Gehäuse (48) herum angeordnet sind und sich axial erstrecken, wobei die Federn (71) regelmäßig um die Längsachse X herum beabstandet sind und erste axiale Enden (72), die auf einem Mantelring (51) des festen Gehäuses (48) aufliegen, und gegenüberliegende zweite axiale Enden (73), die auf dem inneren Ring (65) aufliegen, umfassen.

2. Modul nach dem vorstehenden Anspruch, **dadurch gekennzeichnet, dass** die Federn (71) Druckfedern sind.

3. Modul nach dem Anspruch 1 oder 2, **dadurch gekennzeichnet, dass** die Anzahl der Federn (71) zwischen 6 und 20 beträgt.

4. Modul nach einem der vorstehenden Ansprüche, **dadurch gekennzeichnet, dass** der Mantelring (51) an einem axialen Ende (50) einer zylindrischen Wand (49) des festen Gehäuses (48) angebracht und befestigt ist, wobei das Steuermittel (55) seinen beweglichen Körper (57) um diese zylindrische Wand (49) herum montiert aufweist.

5. Modul nach einem der vorstehenden Ansprüche, **dadurch gekennzeichnet, dass** der bewegliche Körper (57) des Steuermittels (55) radial an der Außenseite einer ringförmigen Wand (59) eines festen Körpers (58) des Steuermittels (55) montiert ist.

6. Modul nach einem der vorstehenden Ansprüche, **dadurch gekennzeichnet, dass** jede Feder (71) in einer Kassette (83) aufgenommen ist, die so konfiguriert ist, dass sie die Feder (71) auf ihrem Innenumfang und auf ihrem Außenumfang leitet.

7. Modul nach einem der vorstehenden Ansprüche, **dadurch gekennzeichnet, dass** der Mantelring (51) eine ringförmige Reihe von Ohren (74) umfasst, die sich in Bezug auf die Längsachse im Wesentlichen radial erstrecken, wobei jedes Ohr (74) einen Sitz zur Aufnahme (78) eines ersten Endes (72) einer Feder definiert.

8. Modul nach einem der vorstehenden Ansprüche, **dadurch gekennzeichnet, dass** die zweiten Enden (73) auf einem an dem inneren Ring (65) befestigten Begrenzungsring (68) aufliegen.

9. Modul nach einem der vorstehenden Ansprüche, **dadurch gekennzeichnet, dass** der Begrenzungsring (68) Aufnahmeschafte (79) der zweiten Enden der Federn umfasst.

10. Modul nach einem der Ansprüche 6 bis 9, **dadurch gekennzeichnet, dass** jede Kassette (83) aus einem Ohr (71) und einem Aufnahmeschaft (79) gebildet ist.

11. Modul nach einem der Ansprüche 8 bis 10, **dadurch gekennzeichnet, dass** der innere Ring (65) des Lagers zur Lastübertragung (56) auf einem inneren Mantelring (67) montiert ist, der um die Längsachse X herum ringförmig ist, und über den zur Längsachse X koaxialen Begrenzungsring (68) mit dem beweglichen Körper (57) verbunden ist.

12. Modul nach einem der vorstehenden Ansprüche, **dadurch gekennzeichnet, dass** die Achsen der Federn (71) auf einem Umfang gelegen sind, dessen Durchmesser ähnlich dem Durchmesser des inneren Rings (65) ist.

13. Modul nach einem der vorstehenden Ansprüche, **dadurch gekennzeichnet, dass** die Federn (71) eine axiale Abmessung aufweisen, die größer ist als jene des mindestens einen Lagers zur Lastübertragung (56), und konfiguriert sind, um eine Entspannungs- oder Kompressionsbahn aufzuweisen, die geeignet ist, die Verschiebung jedes Blatts von einer extremen Arbeitsposition zu einer extremen Segelstellungsposition zu gewährleisten.

14. Turbotriebwerk (1, 1') eines Luftfahrzeugs, umfassend mindestens ein Modul nach einem der vorstehenden Ansprüche.

## Claims

1. A turbomachine module of longitudinal axis X, the module comprising:
- a rotating casing (31) rotatable about the longitudinal axis and carrying a propeller (2; 20, 21, 22) which is provided with a plurality of blades (32);
- a stationary casing (48) comprising a cylindrical wall (49) extending between an internal wall (40) and an external wall (41) of the rotating casing (31); and,
- a system (30) for changing the pitch of the blades of the propeller mounted around the stationary casing (48) and comprising:
∘ a control means (55) comprising a movable body (57) that is able to move axially on said stationary casing (48),
∘ at least one load transfer bearing (56) comprising an internal ring (65) connected to the movable body (57) and an external ring (66); and
∘ a mechanism (61) for connecting the external ring (66) to the blades of the propeller,
the module further comprising a device (70) for feathering the blades of the propeller, the module being **characterised in that** this device (70) comprises an annular row of springs (71) arranged around said stationary casing (48) and extending axially, the springs (71) being evenly spaced about the longitudinal axis X and comprising first axial ends (72) bearing on a shell (51) of the stationary casing (48), and second opposite axial ends (73) bearing on said internal ring (65).

2. The module according to the preceding claim, **characterised in that** the springs (71) are compression springs.

3. The module according to claim 1 or 2, **characterised in that** the number of springs (71) is between 6 and 20.

4. The module according to one of the preceding claims, **characterised in that** the shell (51) is fitted and secured to an axial end (50) of a cylindrical wall (49) of the stationary casing (48), said control means (55) having its movable body (57) mounted around this cylindrical wall (49).

5. The module according to one of the preceding claims, **characterised in that** the movable body (57) of the control means (55) is mounted radially outside an annular wall (59) of a stationary body (58) of the control means (55).

6. The module according to any of the preceding claims, **characterised in that** each spring (71) is housed in a cartridge (83) configured so as to guide the spring (71) on its inner periphery and on its outer periphery.

7. The module according to any of the preceding claims, **characterised in that** the shell (51) comprises an annular row of ears (74) extending substantially radially with respect to said longitudinal axis, each ear (74) defining a housing (78) for receiving a first spring end (72).

8. The module according to one of the preceding claims, **characterised in that** the second ends (73) bear on an annulus (68) attached to said internal ring (65).

9. The module according to the preceding claim, **characterised in that** said annulus (68) comprises barrels (79) for receiving second ends of the springs.

10. The module according to any one of claims 6 to 9, **characterised in that** each cartridge (83) is formed of an ear (71) and of a reception barrel (79).

11. The module according to one of claims 8 to 10, **characterised in that** the internal ring (65) of the load transfer bearing (56) is mounted on an internal shell (67) annular around the longitudinal axis X and is connected to the movable body (57) via the annulus (68) coaxial to the longitudinal axis X.

12. The module according to one of the preceding claims, **characterised in that** the springs (71) have their axes located on a circumference whose diameter is similar to the diameter of said internal ring (65).

13. The module according to one of the preceding claims, **characterised in that** the springs (71) have an axial dimension greater than that of said at least one load transfer bearing (56) and are configured to have an expansion or compression stroke adapted to ensure the displacement of each blade from an extreme working position to an extreme feathering position.

14. An aircraft turbomachine (1, 1') comprising at least one module according to any of the preceding claims.
